# EUROPÄISCHE PATENTANMELDUNG

(11) **EP 0 843 164 A2**
(43) Veröffentlichungstag der Anmeldung: **20.05.1998**
(21) Anmeldenummer: 97113089.3
(22) Anmeldetag: 30.07.1997
(51) Int. Cl.: G01H 1/00

(54) **Vorrichtung und Verfahren zur Körperschall-Güteprüfung**

(30) Priorität: 19.11.1996 DE 19647792
(71) Anmelder: ROBERT BOSCH GMBH, 70442 Stuttgart (DE)
(72) Erfinder: Keiper, Winfried, 71732 Tamm (DE); Bendel, Karl, 71701 Schwieberdingen (DE)

(57) **Zusammenfassung**

Die Erfindung bezieht sich auf eine Vorrichtung und ein Verfahren zur Durchführung einer Körperschall-Güteprüfung an einem Prüfling (1), insbesondere einem Elektromotor, der im Betriebszustand innerhalb eines bestimmten Frequenzbereiches schwingt, wobei die Vorrichtung einen von der Umgebung schwingungsisolierten Prüfhalter (2) sowie eine an ihm angeschlossene Meßeinrichtung (3, 4) zur Messung von Schwingungen aufweist und der zu untersuchende Prüfling (1) mit dem Prüfhalter (2) starr verbunden ist, wobei der Prüfhalter (2) in dem bestimmten Frequenzbereich eine Vielzahl von Moden (5) aufweist. Die Vorrichtung weist erfindungsgemäß weiterhin eine Einrichtung (6) zur zeitlichen Mittelung von zu verschiedenen Zeitpunkten bei verschiedenen Betriebszuständen des Prüflings (1) gemessenen Schwingungen auf.

Bei dem erfindungsgemäßen Verfahren werden die bei verschiedenen Betriebszuständen des Prüflings gemessenen Schwingungen zeitlich gemittelt, wobei die verschiedenen Betriebszustände verschiedene Drehzahlen des Prüflings (1) sind.

Wesentlich ist dabei, daß die Mittelung der Körperschallsignale an einem hochmodalen Prüfhalter (2) bei variabler Betriebsanregung des Prüflings (1) zeitlich durchgeführt wird, wodurch der Einfluß von Resonanzen und Antiresonanzen des Prüfhalters (2) weitgehend aufgehoben wird und eine weitgehend unverfälschte Körperschall-Güteprüfung des Prüflings (1) durchgeführt werden kann.

## Beschreibung

### STAND DER TECHNIK

Die vorliegende Erfindung bezieht sich auf eine Vorrichtung zur Durchführung einer Körperschall-Güteprüfung an einem Prüfling, inbesondere einem Elektromotor, gemäß dem Oberbegriff von Anspruch 1. Ferner bezieht sie sich auf ein entsprechendes Verfahren gemäß Anspruch 4.

Die Untersuchung von Körperschall, der durch kleine mechanische Geräte auf mit den Geräten verbundene Strukturen übertragen wird, ist deshalb wichtig, da ein Großteil der erzeugten Geräusche in erster Linie nicht durch die Geräte selbst (z.B. wegen deren relativ kleinen Oberfläche), sondern vorwiegend durch die mit den Geräten verbundenen Strukturen, wie z. B. Rohre, Platten, Balken, etc., abgestrahlt wird, die vom Menschen als lästiger "Luftschall" empfunden werden. Daneben muß die Einleitung von Schwingungsenergie in die Anbauumgebung, also der Körperschallfluß, häufig auch aus anderen qualitätsrelevanten Gründen kontrolliert werden. Überhöhte Körperschallpegel können etwa zu vorzeitiger Materialermüdung und Schwingungsbruch, sowie zu verschlechtertem Betriebsverhalten aufgrund von vergrößerten Spielen und Losen führen.

Allerdings ist die Messung von Körperschall schwierig, da der Prüfling für die Messung starr mit einem Prüfhalter verbunden wird, an dem die Meßeinrichtung zur Messung der Schwingungen angeschlossen wird. Somit hängen die Meßergebnisse für die Schwingungen nicht nur von den modalen Eigenschaften des Prüflings ab, sondern werden ebenfalls von den modalen Eigenschaften des Prüfhalters beeinflußt. Insbesondere können bereits geringe geometrische Veränderungen, leicht modifizierte Winkel- und Einspannwerte oder Variationen der Randbedingungen von Prüfstandshaltern zu einem unterschiedlichen Eigenschwingungs- und Übertragungsverhalten der Prüfhalter führen. Wenn z. B. auf Grund der natürlich auftretenden Schwankungen im Betriebsverhalten etwa von Elektromotoren während der Prüfung eine leicht verschobene Anregungsfrequenz des Prüflings auftritt, so kann dies zu erheblich veränderten Meßsignalen am Sensor bzw. Signalaufnehmer führen. Diese Meßfehler können zu Fehlbeurteilungen von Prüflingen führen.

Um diese Meßfehler zu umgehen, verwendet man sogenannte hochmodale Prüfhalter, die im zu untersuchenden Frequenzbereich viele Eigenfrequenzen bzw. Moden aufweisen. Derartige Prüfhalter besitzen ein über der Frequenz deutlich weniger ausgeprägtes Übertragungsverhalten. Die vom Prüfling in den Prüfhalter und dann in die Meßeinrichtung eingespeisten Schwingungen und Körperschallsignale werden dadurch weniger stark verfälscht. Bei bekannten Verfahren wird eine räumliche bzw. geometrische Mittelung über viele Meßorte auf einem solchen Prüfhalter durchgeführt, die zu stabilen, den Prüfling wiederholgenau charakterisierenden Meßergebnissen führt. Eine Vielzahl von Prüfhaltertypen mit hoher Modendichte sind bekannt. So können z. B. bedämpfte Stahl- oder Aluminiumbleche, perforierte Bleche und ringförmig gebogene Blechstrukturen verwendet werden. Diese Vorgehensweise der geometrischen Mittelung über viele Meßorte an einem hochmodalen Prüfhalter ist jedoch mit einem erheblichen Meßaufwand verbunden, da viele Sensoren eingesetzt werden müssen.

### VORTEILE DER ERFINDUNG

Die erfindungsgemäße Vorrichtung mit den Merkmalen des Anspruchs 1 bzw. das erfindungsgemäße Verfahren mit den Merkmalen des Anspruchs 4 der vorliegenden Erfindung ermöglicht es, die hohe Modendichte eines geeigneten Prüfhalters mit nur einem einzigen, höchstens jedoch zwei Sensoren auszunutzen. Dies gelingt mittels Variation der Betriebsfrequenz des Prüflings, wie z. B. der Drehzahl des Elektromotors. Der zu prüfende Elektromotor wird mit geeignet variabler Spannung betrieben, oder die an den Motor angelegte Last wird entsprechend variiert. Wichtig ist dabei, daß die Bandbreite der interessierenden drehzahlabhängigen Anregungsfrequenzen des Prüflings bei der Messung eine größere Anzahl von Moden des Prüfhalters überstreichen. Indem man die üblichen Körperschallsignale, die mit herkömmlichen Prüfeinrichtungen auf herkömmliche Weise gemessen werden, über eine geeignet gewählte Anzahl von Zeitpunkten mittelt, kann der Einfluß von Resonanzen und Antiresonanzen des Prüfhalters durch diese Mittelung weitgehend aufgehoben werden. Das erfindungsgemäße Verfahren läßt sich besonders vorteilhaft realisieren, wenn man den Motor im Hochlauf oder Herunterlauf alle Betriebsdrehzahlen durchlaufen läßt.

Da man anstelle der geometrischen Mittelung über viele Meßorte und entsprechend viele Sensoren erfindungsgemäß über eine geeignet gewählte Anzahl von Zeitpunkten mit nur einem einzigen oder zwei Sensoren mittelt, wird eine kostengünstige Messung der Eigenschaften des Prüflings weitgehend unabhängig von den Prüfstandseigenschaften möglich. Dies erhöht nicht nur die Aussagesicherheit der Güteprüfung, sondern macht auch verschiedene gleichartige Prüfstände untereinander vergleichbar, selbst wenn die Prüfhalter an unterschiedlichen Standorten aufgebaut sind oder durch geringfügig modifizierte Winkel- und Einspannwerte oder Variationen der Randbedingungen ein unterschiedliches Übertragungsverhalten haben.

Durch die in den Unteransprüchen aufgeführten Maßnahmen sind vorteilhafte Weiterbildungen und Verbesserungen der Gegenstände der Ansprüche 1 und 4 möglich.

### ZEICHNUNG

Ein Ausführungsbeispiel der Erfindung ist in der Zeichnung dargestellt und in der nachfolgenden Beschreibung näher erläutert. Es zeigen:
- Fig. 1: eine schematische Darstellung eines Prüfhalters zur Durchführung der Körperschall-Güteprüfung an einem Prüfling mittels einer erfindungsgemäßen Vorrichtung; und
- Fig. 2: den Prüfhalter mit Prüfling und erfindungsgemäßer Vorrichtung von Fig. 1 entlang des Pfeiles I betrachtet.

### BESCHREIBUNG DES AUSFÜHRUNGSBEISPIELS

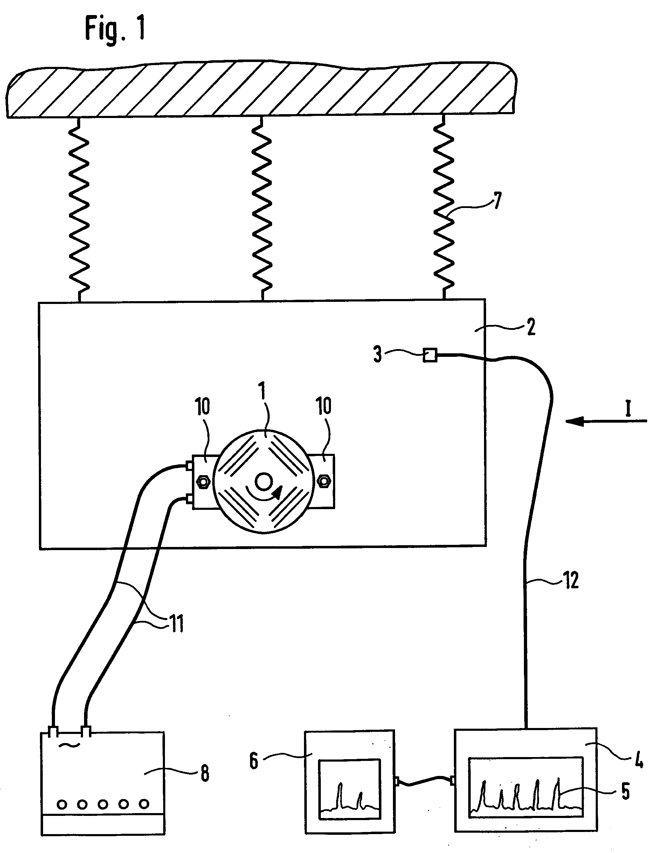

Fig. 1 zeigt einen Prüfhalter 2, der über flexible Aufhängungen 7 von seiner Umgebung weitgehend schwingungsisoliert aufgehängt ist. Der zu untersuchende Prüfling ist im vorliegenden Falle ein Elektromotor 1, der über starre Befestigungsvorrichtungen 10 mit dem Prüfhalter 2 verbunden ist, so daß der beim Betrieb des Prüflings auftretende Körperschall auf den Prüfhalter 2 übertragen wird. Der Elektromotor 1 wird mittels einer Spannungsquelle 8 über Stromleitungen 11 angetrieben. Die von dem Elektromotor 1 im Betrieb auf den Prüfhalter 2 übertragenen Körperschall-Schwingungen werden von einem Sensor 3 erfaßt und über eine Meßsignalleitung 12 auf eine Meßdatenverarbeitungsvorrichtung 4 übertragen. Die Meßdatenverarbeitungsvorrichtung 4 erfaßt sowohl die Eigenfrequenzen des Elektromotors 1 als auch die im Frequenzbereich liegenden Eigenfrequenzen bzw. Moden 5 des Prüfhalters 2. Die bei variabler Betriebssanregung des Elektromotors 1 erfaßten Körperschallsignale des hochmodalen Prüfhalters 2 werden in einer nachgeschalteten Einrichtung 6 zeitlich gemittelt. Durch diese zeitliche Mittelung läßt sich der Einfluß von Resonanzen und Antiresonanzen des Prüfhalters stark verringern.

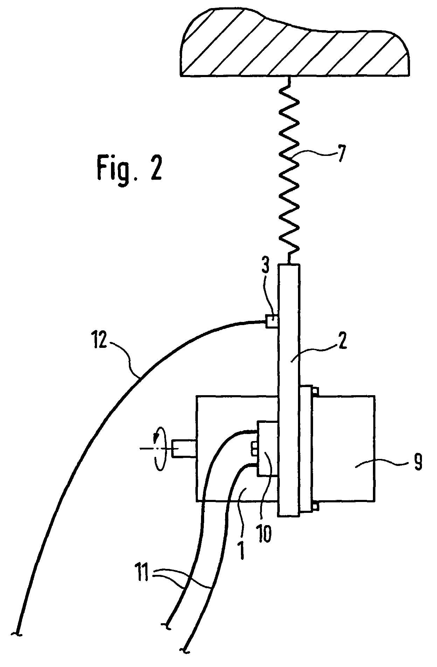

Fig. 2 zeigt den Prüfhalter 2 mit dem Elektromotor 1 und der erfindungsgemäßen Vorrichtung für die Körperschall-Güteprüfung entlang des Pfeiles I betrachtet. Die Meßdaten-Verarbeitungsvorrichtung 4 mit der Anzeige für die Moden 5 sowie die Einrichtung 6 zur zeitlichen Mittelung und die Spannungsquelle 8 sind in Fig. 2 nicht gezeigt. Insbesondere erkennt man ein Prüfling-Gegengewicht 9, das wahlweise an dem Prüfhalter 2 zum Ausgleich der Masse des Prüflings befestigt werden kann.

Bei dem erfindungsgemäßen Verfahren zur Durchführung der Körperschall-Güteprüfung an dem Elektromotor 1 wird zu verschiedenen Zeitpunkten bei verschiedenen Betriebszuständen des Prüflings 1 an den gemessenen Körperschall-Schwingungen eine zeitliche Mittelung durchgeführt. Durch Variation der von der Spannungsquelle 8 abgegebenen Spannung läßt sich der gesamte Drehzahlbereich des Elektromotors 1 durchlaufen. Die Drehzahlen des Elektromotors 1 können z. B. so variiert werden, daß der Elektromotor 1 einen Drehzahlbereich durchläuft, der sich über eine größere Anzahl von Moden 5 des Prüfhalters 2 erstreckt. Alternativ kann die Drehzahl des Elektromotors 1 auch durch eine variable Last an dem Elektromotor 1 verändert werden. Hierfür kann eine in der Zeichnung nicht gezeigte Wirbelstrombremse verwendet werden. Vorzugsweise wird der Elektromotor 1 von seiner minimalen bis zu seiner maximalen Drehzahl hochgefahren und anschließend von seiner maximalen Drehzahl zu seiner minimalen Drehzahl heruntergefahren, wobei während des Hochfahrens und Herunterfahrens der Drehzahlen zu verschiedenen Zeitpunkten von dem Elektromotor 1 auf den Prüfhalter 2 übertragene Körperschall-Schwingungen über den Sensor 3 und die Meßdatenverarbeitungsvorrichtung 4 gemessen und anschließend durch die Einrichtung 6 zeitlich gemittelt werden.

Selbstverständlich können mit der beschriebenen Einrichtung auch Körperschall-Güteprüfungen an anderen schwingenden oder rotierenden Vorrichtungen durchgeführt werden.

## Patentansprüche

1. Vorrichtung zur Durchführung einer Körperschall-Güteprüfung an einem Prüfling (1), insbesondere einem Elektromotor, der im Betriebszustand innerhalb eines bestimmten Frequenzbereiches schwingt, wobei die Vorrichtung einen von der Umgebung schwingungsisolierten Prüfhalter (2) sowie eine an ihm angeschlossene Meßeinrichtung (3, 4) zur Messung von Schwingungen aufweist und der zu untersuchende Prüfling (1) mit dem Prüfhalter (2) starr verbindbar ist, wobei der Prüfhalter (2) in dem bestimmten Frequenzbereich eine Vielzahl von Moden (5) aufweist, dadurch gekennzeichnet, daß die Vorrichtung weiterhin eine Einrichtung (6) zur zeitlichen Mittelung von zu verschiedenen Zeitpunkten bei verschiedenen Betriebszuständen des Prüflings (1) gemessenen Schwingungen aufweist.

2. Vorrichtung nach Anspruch 1, dadurch gekennzeichnet, daß die Meßeinrichtung (3, 4) aus maximal zwei Sensoren (3) besteht und die verschiedenen Betriebszustände verschiedene Drehzahlen des Prüflings (1) sind.

3. Vorrichtung nach Anspruch 2, dadurch gekennzeichnet, daß sich die verschiedenen Drehzahlen über eine größere Anzahl von Moden (5) des Prüfhalters (2) erstrecken.

4. Verfahren zur Durchführung einer Körperschall-Güteprüfung an einem Prüfling, insbesondere einem Elektromotor, mittels der Vorrichtung von Anspruch 1, wobei zu verschiedenen Zeitpunkten bei verschiedenen Betriebszuständen des Prüflings an dein Prüfhalter gemessene Schwingungen zeitlich gemittelt werden.

5. Verfahren nach Anspruch 4, dadurch gekennzeichnet, daß die verschiedenen Betriebszustände verschiedene Drehzahlen des Prüflings sind.

6. Verfahren nach Anspruch 4, dadurch gekennzeichnet, daß die Drehzahlen des Prüflings so variiert werden, daß der Prüfling Drehzahlen durchläuft, die sich über eine größere Anzahl von Moden des Prüfhalters erstrecken, oder daß ein zu untersuchender Drehzahlbereich mehrfach durchlaufen wird, insbesondere auch verschieden schnell.

7. Verfahren nach Anspruch 6, dadurch gekennzeichnet, daß die Variation der Drehzahlen durch Variieren der Antriebsspannung und/oder der Last an dem Prüfling bewirkt wird.

8. Verfahren nach Anspruch 5 bis 7, dadurch gekennzeichnet, daß der Prüfling von seiner minimalen bis zu seiner maximalen Drehzahl hochgefahren und von seiner maximalen Drehzahl zu seiner minimalen Drehzahl heruntergefahren wird, wobei während des Hochfahrens und des Herunterfahrens der Drehzahlen zu verschiedenen Zeitpunkten Schwingungen am Prüfhalter gemessen und dann gemittelt werden.
